# EUROPEAN PATENT SPECIFICATION

(11) **EP 3 104 297 B1**
(45) Date of publication and mention of the grant of the patent: **18.12.2019**
(21) Application number: 15305868.0
(22) Date of filing: 08.06.2015
(51) Int. Cl.: G06F 21/77

(54) **SLAVE SMARTCARD USED AS A MEMORY EXTENSION FOR A MASTER SMARTCARD**
SLAVE-CHIPKARTE ALS SPEICHERERWEITERUNG FÜR EINE MASTER-CHIPKARTE
CARTE À PUCE ESCLAVE UTILISÉE COMME UNE EXTENSION DE MÉMOIRE POUR UNE CARTE À PUCE MAÎTRE

(43) Date of publication of application: 14.12.2016
(73) Proprietor: IDEMIA France, 92700 Colombes (FR)
(72) Inventor: Magcawas, Alexander, 92700 Colombes (FR)
(74) Representative: Underwood, Nicolas Patrick

(56) References cited:
- EP-A1- 2 306 414
- WO-A1-02/058004
- Gematik: "Einführung der Gesundheitskarte Spezifikation der elektroni- schen Gesundheitskarte", , 20 March 2008 (2008-03-20), XP055541988, Retrieved from the Internet: URL:https://fachportal.gematik.de/fileadmi n/user_upload/fachportal/files/Spezifikati onen/Basis-Rollout/Elektronische_Gesundhei tskarte/gematik_eGK_Spezifikation_Teil1_V2 _2_0.pdf [retrieved on 2019-01-15]

## Description

The technical domain of the invention is the domain of smartcards. More particularly, the invention concerns the use of at least one slave smartcard to extend the memory capacity of a master smartcard.

A smartcard, or IC-card, comprises a, generally small, support embedding a microcircuit. The support is generally plastic and can take several form factors, such as, among others: ISO card, USB key, SD memory and passport. The microcircuit comprises memory means secured by computing means. The microcircuit can be activated, and its memory means read or written, through a communication interface, allowing connection to a host terminal comprising a corresponding communication interface. A smartcard can securely store user data. It thus can be used as a bank card, e.g. to make payments, as a mobile phone subscription card, SIM, to allow a mobile phone to operate, as an ID card or travel document, etc.

One of the biggest challenges in the smartcard industry today is the limited amount of storage in the memory means of the microcircuit. Since the memory means is used to store both data, such as user confidential data or cryptographic means, and programs or codes, such as to access, control and treat said data, a limitation in memory capacity can causes several problems: amount of data that can be stored in the memory means is limited or is not enough, or the size of the code is so big that it cannot be stored in the memory means along with data. It may be necessary to reduce the code's size by removing some features to reach an available memory means size or to free an acceptable memory means size for data.

Document WO 02/058004 describes a smart card micromodule interconnection and a portable electronic device comprising a plurality of network-connected smart card micromodules. Document EP 2 306 414 describes a communication method between a reader and two smart cards. Document Gematik: "Einführung der Gesundheitskarte Spezifikation der elektroni- schen Gesundheitskarte",, 20 March 2008 (2008-03-20), XP055541988,Retrieved from the Internet:URL:https://fachportal.gematik.de/fileadmin/ user_upload/fachportal/files/Spezifikationen/Basis-Rollout/ Elektronische_Gesundheitskarte/gematik_eGK_Spezifikation_Teill_V2_2_0.pdf discloses the specification of the German Healthcard. This specification includes the usage of a doctor and a patient card, where the commands which are to be sent by the host terminal to the patient card are first transfered through the doctor card. The responses from the patient card are also transfered to the doctor card before being received by the host reader. In particular, a card to card authentication protocol is described, where each cards verifies the signature of the other.

The invention is defined by the independent claims. Different embodiments are covered by the dependent claims. The present invention addresses and solves the above problem. It proposes to use at least one other smartcard, hereafter called a slave smartcard, as an extra memory means so as to extend the memory means of one smartcard, hereafter called the master smartcard.

The present invention concerns a system, comprising a master smartcard comprising a microcircuit comprising computing means and memory means and a communication interface able to communicate with a host terminal, and a host terminal comprising computing means, a man machine interface, and at least one corresponding communication interface able to communicate with said master smartcard, and at least one slave smartcard comprising a microcircuit comprising computing means and memory means and a communication interface able to communicate with a host terminal, the host terminal comprising at least one corresponding communication interface able to communicate with said slave smartcard, and said slave smartcard being arranged so that its memory means can be used as extension for the memory means of the master smartcard.

The main advantage of the invention is, since as much slave smartcards as wanted can be used, the memory size is practically infinite.

According to another feature any command finally intended to a slave smartcard or any corresponding response from a slave smartcard, transits through the master smartcard.

According to another feature said master smartcard is arranged to selectively redirect a create memory command to said at least one slave smartcard.

According to another feature said master smartcard is arranged to keep record of any redirected create memory command and to redirect accordingly any following corresponding write memory command or read memory command.

According to another feature any redirected command is initially cyphered by the master smartcard and finally deciphered by the slave smartcard, using a cryptographic means shared between the master smartcard and the slave smartcard.

According to another feature any response to a redirected command is initially cyphered by the slave smartcard and finally deciphered by the master smartcard, using a cryptographic means shared between the master smartcard and the slave smartcard.

According to another feature the system further comprises commands to remotely authenticate a slave smartcard comprising: a seed command, to obtain a seed from the master smartcard, a challenge command, to transmit said seed to the slave smartcard and to have said seed cyphered by the slave smartcard, using a cryptographic means shared between the master smartcard and the slave smartcard, and an authenticate command, to transmit said cyphered seed to the master smartcard and have said cyphered seed checked by the master smartcard.

According to another feature a slave smartcard must be authenticated before any redirection to said slave smartcard takes place.

According to another feature the system further comprises commands to remotely authenticate a master smartcard comprising: a seed command, to obtain a seed from the slave smartcard, a challenge command, to transmit said seed to the master smartcard and to have said seed cyphered by the master smartcard, using a cryptographic means shared between the slave smartcard and the master smartcard, and an authenticate command, to transmit said cyphered seed to the slave smartcard and have said cyphered seed checked by the slave smartcard.

According to another feature any command transmitted from the host terminal to the master smartcard is cyphered by the host terminal and deciphered by the master smartcard, and any response transmitted from the master smartcard to the host terminal is cyphered by the master smartcard and deciphered by the host terminal, both using a cryptographic means shared between the host terminal and the master smartcard.

According to another feature any command transmitted from the host terminal to a slave smartcard is cyphered by the host terminal and deciphered by the slave smartcard, and any response transmitted from a slave smartcard to the host terminal is cyphered by the slave smartcard and deciphered by the host terminal, both using a cryptographic means shared between the host terminal and said slave smartcard.

According to another feature commands and responses are drafted using a given application protocol, preferably the application protocol data unit, APDU, protocol, wherein the master smartcard comprises a protocol command to encapsulate a command to be redirected, according to said application protocol, and wherein the slave smartcard comprises a protocol command to encapsulate a response to a redirected command, according to said application protocol.

According to another feature commands and responses are exchanged using a given transmission protocol, preferably the secure messaging, SM, protocol.

The invention further concerns a master smartcard able to operate in such a system.

The invention further concerns a slave smartcard able to operate in such a system.

The invention further concerns a host terminal able to operate in such a system.

Others features, details and advantages of the invention will become more apparent from the detailed illustrating description given hereafter with respect to the drawings on which:
- figure 1 is a synoptic view of a system comprising a master smartcard, a slave smartcard and a host terminal,
- figure 2 is a diagram showing a typical direct command/response mechanism, between a host terminal and a smartcard,
- figure 3 is a diagram showing direct memory management commands/responses, between a host terminal and a smartcard,
- figure 4 is a diagram showing a typical redirected command/response mechanism, between a host terminal, a master smartcard and a slave smartcard,
- figure 5 is a diagram showing a redirected create memory command/response,
- figure 6 is a diagram showing a redirected read memory command/response,
- figure 7 is a diagram showing a remote authentication.

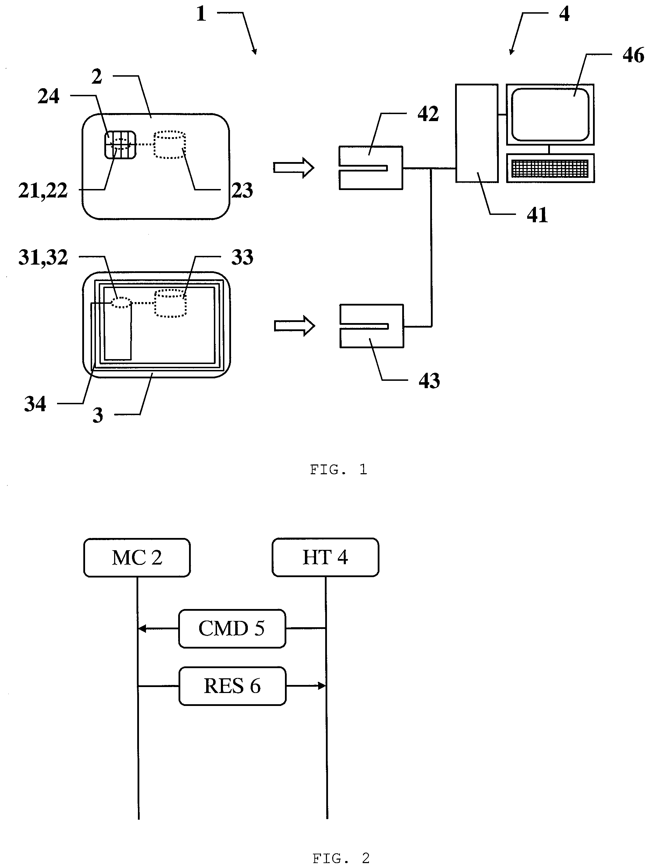

As illustrated in figure 1, a smartcard 2, comprises a support embedding a microcircuit 21. The support is generally a thin foil, e.g. of paper or plastic, and can take several form factors. The microcircuit 21 is an embedded chip. As such, it possesses computing means 22, composed of a combination of hardware and software means. The hardware means is part of the chip 21 and is able to run the software means. The microcircuit 21 further comprises memory means 23. Despites said memory means 23 is functionally represented separated in the figure, the memory component, is generally integrated in the chip 21. Said memory means 23 is typically used to store data. It is also used to store program code defining the software means. Data stored in said memory means 23 can only be accessed through some access programs ran by the microcircuit 21. Said access programs can use e.g. cryptographic means to determine if a requester is allowed to access some data, e.g. by authenticating such a requester. The smartcard 2, with its microcircuit 21, is then a secure device able to secure data stored in its memory means 23 and able to provide access to said data, by means of its computing means 22.

Such a smartcard 2 is generally small and generally does not carry any electric power. To operate, a smartcard 2 needs a host terminal 4 to power it on and to command it to do some task. To receive power and to communicate with a host terminal 4, a smartcard 2 comprises a communication interface 24. Such a communication interface 24 can be a contact interface, such as a connector, e.g. a contact plate 24, as illustrated with the master smartcard 2, or a contactless interface, such as an antenna 34, as illustrated with the slave smartcard 3. A smartcard 2, 3 can also be dual and comprises both a contact interface and a contactless interface.

In order to activate a smartcard 2, and its microcircuit 21, and to access to its memory means 23, to read or write some data, a host terminal 4 comprises a corresponding communication interface 42, in the form of a reader, generically called InterFace Device, IFD, able to provide electric energy to the microcircuit 21 and to communicate with it. Said communication interface 42 is adapted to a contact interface and/or to a contactless interface. A host terminal 4 can be any general purpose computer. It comprises computing means 41, and a man machine interface 46, figured here generically by a display and a keyboard, and also dedicated application software to manage dialog with an operator.

Since a smartcard 2, generally does not comprises any man machine interface, any operation involving a smartcard 2 is initiated from the host terminal 4. The diagram of figure 2 illustrates such a typical operation.

In order to have a smartcard 2 realize a given operation, the host terminal 4, after powering on the smartcard 2, builds a command 5 and sends it to the smartcard 2. Said command 5 is built according to a command protocol shared with the smartcard 2, such as the Application Protocol Data Unit, APDU, protocol. Said command 5 contains all the necessary elements to realize said operation: the exact definition of the operation and all the necessary afferent parameters. Upon reception of said command 5, the smartcard 2 identifies the operation and accordingly executes one of its resident programs to realize said operation. Most of the time one resident program is associated to each operation. When the operation is realized, the smartcard 2 builds a response 6 and sends it back to the host terminal 4. Said response 6 is built according to the same command protocol shared with the host terminal 4. Said response 6 contains the content of the response: the execution status of the operation. It can eventually contain a result. It can also contain a reference to the operation/command to which it responds. For instance, if the operation is a read operation, the result comprises the read data. Upon reception of said response 6, the host terminal 4 knows how the operation has been realized and gets an eventually expected result.

All operations involving a smartcard 2 follow the same scheme. Operations a smartcard 2 can realize are known by, generally corresponding, programs loaded into said smartcard 2. Accordingly, to add an operation, in order to extend the capabilities of a smartcard 2, a corresponding program must be loaded. Corresponding command 5 and response 6 must also be added and shared between the host terminal 4 and the smartcard 2.

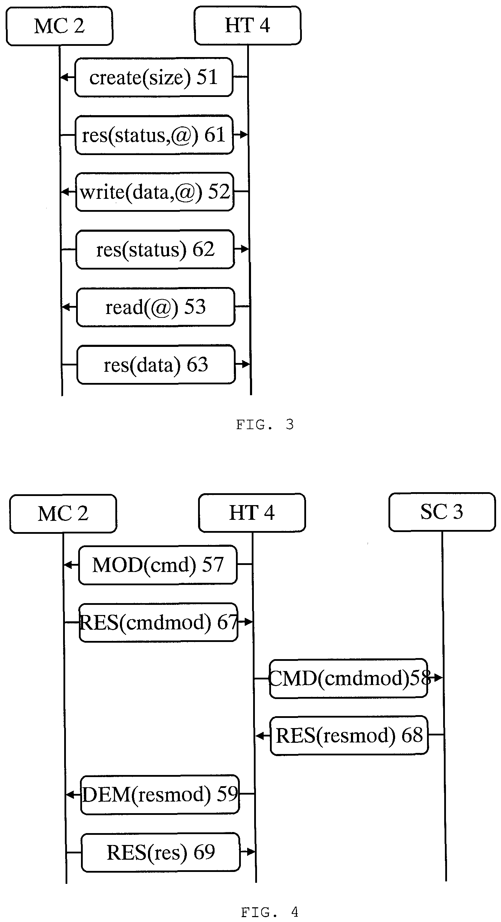

To manage a memory means 23 of a smartcard 2, as is known, a system 1 generically needs three kinds of operations/ programs associated to corresponding commands/ responses: CREATE, WRITE and READ. This is illustrated by the diagram of figure 3.

A first operation is a CREATE MEMORY. Before any other operation can take place, a file/object must be created by reserving a given amount of memory and allocating it to said file/object. Such an operation, generically called "create memory", stands for: create file, create binary, create object, open file, open binary, open object, etc., according to the language or protocol used. Such a create memory operation reserves a given amount of memory, and logically associates a name/identifier/address, generically called addressing means @, to said file/object. Any further reference to said file/object will be made using said addressing means @. Parameters of a create memory command 51 comprise a size of the file/object. Parameters of a corresponding response 61 comprise a status, OK or NOK, and the addressing means @. Once a file/object is so created, WRITE or READ operations can repeatedly be applied to it.

A second operation is a WRITE MEMORY. Such an operation, generically called "write memory", stands for: write binary, write data, update binary, update data, put binary, put data, etc., according to the language or protocol used. Such a write memory operation writes a provided data in a previously created given file/object, indicated by its addressing means @. Parameters of a write memory command 52 comprise the data to write and the addressing means of the targeted file/object. Parameters of the corresponding response 62 comprise a status, OK or NOK.

A third operation is a READ MEMORY. Such an operation, generically called "read memory", stands for: read binary, read data, get binary, get data, etc., according to the language or protocol used. Such a read memory operation reads a previously created given file/object, indicated by its addressing means @, and returns the read data. Parameters of a read memory command 53 comprise the addressing means @ of the targeted file/object. Parameters of the corresponding response 63 comprise eventually a status, OK or NOK, and the read data.

Said three known operations allow managing a memory means 23 of a smartcard 2. They necessitates three programs: create memory, write memory, and read memory, loaded into the smartcard 2, three corresponding commands: create memory command 51, write memory command 52, and read memory command 53, issuable by the host terminal 4 and understandable by the smartcard 2, and three corresponding responses 61, 62, 63, issuable by the smartcard 2 and understandable by the host terminal 4.

A problem occurs when the amount of memory available in the memory means 23 runs short. Such a situation is detected during a create memory operation, when the size of the file/objet to create is greater than the remaining amount of available memory in the memory means 23 of the smartcard 2.

According to prior art, this results in an error, e.g. appearing as a NOK status in the create memory response 61.

According to the invention, when, or before, a main smartcard 2, hereafter called the master smartcard 2, runs short of memory, at least one secondary smartcard 3, hereafter called a slave smartcard 3 is used to extend the memory capacity of the master smartcard 2.

Said slave smartcard 3 is, in many ways, and unless otherwise specified, similar to the master smartcard 2 as previously described.

With reference to figure 1, a slave smartcard 3 comprises a support embedding a microcircuit 31. The microcircuit 31 is an embedded chip. As such, it possesses computing means 32, composed of a combination of hardware and software means. The hardware means is part of the chip 31 and is able to run the software means. The microcircuit 31 further comprises memory means 33. Despites said memory means 33 is functionally represented separated in the figure, the memory component, is generally integrated in the chip 31. Said memory means 33 may be used to store data or program code defining the software means. Data stored in said memory means 33 can only be accessed through some access programs ran by the microcircuit 31. Said access programs can use e.g. cryptographic means to determine if a requester is allowed to access some data, e.g. by authenticating such a requester. A slave smartcard 3, with its microcircuit 31, is then a secure device able to secure data stored in its memory means 33 and able to provide access to said data, by means of its computing means 32.

As the master smartcard 2, a slave smartcard 3 needs a host terminal 4 to power it on and to command it to do some operation. To receive power and to communicate with a host terminal 4, a slave smartcard 3 comprises a communication interface 34. Such a communication interface 34 can be a contact interface, such as a contact plate 24, and/or a contactless interface, such as an antenna 34.

In order to activate a slave smartcard 3, and its microcircuit 31, and to access its memory means 33, to read or write some data, the host terminal 4 comprises a corresponding communication interface 43, in the form of a reader, generically called InterFace Device, IFD, able to provide electric energy to the microcircuit 31 and to communicate with it. Said communication interface 43 is adapted to a contact interface and/or to a contactless interface.

A basic idea of the invention is to have at least one slave smartcard 3 arranged so that its memory means 33 can, at least partially, be used as extension for the memory means 23 of the master smartcard 2.

As for the master smartcard 2, any operation involving a slave smartcard 3 is initiated from the host terminal 4. However, in order to keep control of any operations involving a slave smartcard 3, any command 5 finally intended to a slave smartcard 3, that is, any command corresponding to a program loaded into a slave smartcard 3 or any corresponding response 6 from a slave smartcard 3, transits through the master smartcard 2. This, as will be described in details, allows the master smartcard 2 to keep control, to keep record of operations, to redirect and to secure, e.g. by cyphering/deciphering. This implies any command the host terminal 4 intend to have a slave smartcard 3 realize must first be sent to the master smartcard 2, and reciprocally, any response send by a slave smartcard 3 is first sent to the master smartcard 2.

The general scheme of an operation involving a slave smartcard 3, which could be called indirect or redirected scheme, is illustrated on the diagram of figure 4, to be compared to the diagram of figure 2, which could be called direct scheme, where only a master smartcard 2 is involved.

In order to have a slave smartcard 3 realize a given operation, the host terminal 4, after powering on the slave smartcard 3, builds a command "cmd". Said command "cmd" contains all the necessary elements to realize said operation: the exact definition of the operation and all the necessary afferent parameters.

But, here, instead of directly sending said command "cmd" to the slave smartcard 3, the host terminal 4 sends it to the master smartcard 3, by mean of a modify, MOD, command 57. Said modify command 57 is a new command, added by the invention. The purpose of said modify command 57 is to modify a command "cmd" intended to the slave smartcard 3, into a modified command "cmdmod", which is in shape to be received and understood by the slave smartcard 3. The master smartcard 2 responds using a response 67 including said modified command "cmdmod". The host terminal 4 can then send said modified command "cmdmod" to the slave smartcard 3, through a command 58. The slave smartcard 3 realizes the command defined by said modified command "cmdmod". The aim of said modus operandi is to make the host terminal 4 unable to build a command directly understandable by the slave card 2, and thus to force the host terminal 4 to transit, for any command, through the master smartcard 2.

Upon reception of said modified command "cmdmod", the slave smartcard 3 identifies the operation and accordingly executes one of its programs to realize said operation.

Here it can be noted that any prior art program, that could be triggered directly through an unmodified command "cmd", must be replaced by a corresponding program which, according to the invention, albeit applying generally the same operation, could only be triggered through a modified command "cmdmod".

When the operation defined by said modified command "cmdmod" is realized, the slave smartcard 3 gets a result. The result of the command "cmdmod" is itself modified by the slave smartcard 3, in a way similar to the modification of the command "cmd" applied by the modify command 57, to provide a modified response "resmod". Said modified response "resmod" is then sent back to the host terminal 4, through a response 68. Said response "resmod", since it is purposely modified, cannot be understood by the host terminal 4 and must first be treated during a transit through the master smartcard 2. This is done by a demodify, DEM, command 59. Said demodify command 59 is sent by the host terminal 4 to the master smartcard 2 along with said modified response "resmod". Said modified response "resmod" is demodified by the master smartcard 2, to provide a demodified response "res". Said demodified response "res" is then sent back to the host terminal 4, through a response 69. The aim of said modus operandi is to have the host terminal 4 unable to understand a response from the slave card 2, and thus to force the host terminal 4 to transit, for any response, through the master smartcard 2.

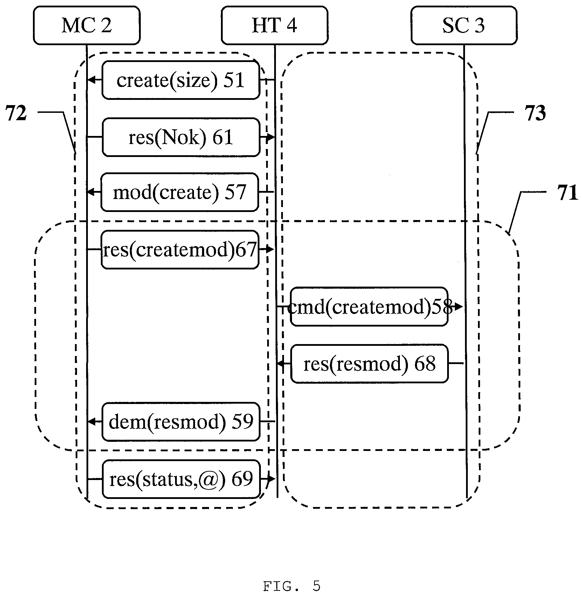

A slave smartcard 3, is typically introduced during a create memory operation, when a master smartcard 2 choose not to create, for any reason, or cannot create, because it does not have enough remaining memory space, a file/object in its own memory means 23. This is illustrated by the diagram of figure 5.

A create memory operation is initiated by the host terminal 4, sending a usual, prior art, create memory command 51 to the master smartcard 2, comprising all necessary parameters, such as at least the size of the file/objet to create. Here two cases can be encountered.

First, the master smartcard 2 has enough remaining available memory space AND choose to create said object/file in its own memory means 23. In this case, not represented, everything occurs according to prior art. The master smartcard 2 ends the create memory operation returning a response 61 comprising a positive status and an addressing means @ pointing toward its memory means 23.

Second, the master smartcard 2 either has not enough remaining available memory space, and is thus obliged to, or choose to create said object/file in another memory means 33, e.g. of a slave smartcard 3. In this case, the master smartcard 2 ends the operation returning a response 61 comprising a negative status, Nok. Here, the master smartcard 2 eventually indicates, in its response 61, a possible slave card 3 to use.

Upon receiving said negative response 61, the host terminal 4 starts a redirected operation, here a redirected create memory. This is done by sending to the master smartcard 2, a create memory command intended to a slave smartcard 3. Said redirected create memory command is sent using a modify command 57 containing a create memory command "create", able to be redirected, and with all its necessary parameters. The master smartcard 2 modifies said create memory command "create" to provide a modified create memory command "createmod", understandable by the slave smartcard 3, and returns it to the host terminal 4 through a response 67.

The host terminal 4 then sends said modified create memory command "createmod" to the slave smartcard 3. The slave smartcard 3 realizes the create memory command, by creating, if enough memory is available, an object/file in its own memory means 33. The slave smartcard 3 then produces a result of the create memory operation. Said result is positive if enough memory is available and the object/file has successfully been created. In this case the result also comprises an addressing means @ pointing to said created object/file. If, for any reason, the file/object cannot be created, the result is negative. Said result is then modified, into a modified result "resmod" and sent back to the host terminal 4, through a response 68.

The host terminal 4, unable to understand the modified result "resmod" sent it to the master smartcard 2, using the demodify command 59. The master smartcard 2 takes advantage of the mandatory transit through itself to take account of the result. By doing so, the master smartcard 2 knows if the create memory operation was successful or not and can keep record of addressing means @, for future use. The master smartcard 2 then demodifies the result, and sends it, in clear, to the host terminal 4 through a response 69.

If the status is negative, the host terminal 4 can e.g. take the opportunity to try another create memory operation toward another slave smartcard, if available.

According to another simplified embodiment, instead of answering to the host terminal 4 to the create memory command 51 with a negative response 61, forcing the host terminal 4 to issue a new modify command 57, the master smartcard 2 can directly answers with a response 67, comprising a modified command. This cancels, in the diagram of figure 5, both the response 61 and the modify command 57.

It is important, that during a create memory operation, the master smartcard 2 keeps record of what object/file is created and on which slave smartcard said object/file is located. This allows any subsequent read/write operation.

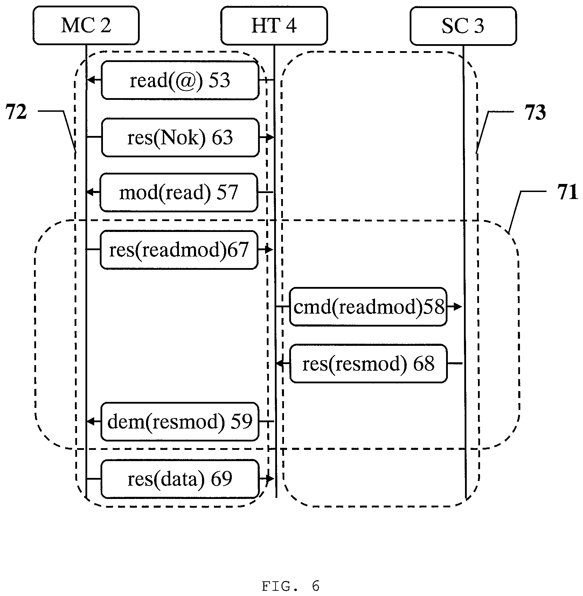

Both read and write operations follow quite the same scheme, as illustrated in figure 6, with a read case.

A read memory operation is initiated by the host terminal 4, sending a usual, prior art, read memory command 53 to the master smartcard 2, comprising all necessary parameters, such as addressing means @ of the data to read. Here two cases can be encountered.

First, the intended file/object, as defined by the addressing means @, has been created and is located in the memory means 23 of the master smartcard 2. In this case, not represented, everything occurs according to prior art. The master smartcard 2 ends the read memory operation returning a response 61 comprising a positive status and the read data.

Second, as is known to the master smartcard 2 thanks to its previous recording, the intended file/object has been created and is located in the memory means 33 of a slave smartcard 2. In this case, the master smartcard 2 ends the read memory operation returning a response 63 comprising a negative status, Nok. Here, the master smartcard 2, thanks to its recording, is able to indicate, in its response 63, which slave card 3 to read. Alternately, the slave smartcard 3 may also be known from the addressing means @.

Upon receiving said negative response 63, the host terminal 4 starts a redirected operation, here a redirected read memory. This is done by sending to the master smartcard 2, a read memory command intended to said slave smartcard 3. Said redirected read memory command is sent using a modify command 57 containing a read memory command "read", able to be redirected, and with all its necessary parameters. The master smartcard 2 modifies said read memory command "read" to create a modified read memory command "readmod", understandable by the slave smartcard 3, and returns it to the host terminal 4 through a response 67.

The host terminal 4 then sends said modified read memory command "readmod" to said slave smartcard 3. The slave smartcard 3 realizes the read memory command, by reading, in its own memory means 33, the right object/file, as indicated by addressing means @. The slave smartcard 3 then produces a result of the read memory operation. Said result comprises the read data. Said result is then modified, into a modified result "resmod" and sent back to the host terminal 4, through a response 68.

The host terminal 4, unable to understand the modified result "resmod", sends it to the master smartcard 2, using the demodify command 59. The master smartcard 2 then demodifies the result, and sends it, in clear, to the host terminal 4 through a response 69.

Here again, according to another simplified embodiment, instead of answering to the host terminal 4 to the read memory command 53 with a negative response 63, forcing the host terminal 4 to issue a new modify command 57, the master smartcard 2 can directly answers with a response 67, comprising a modified command "readmod". This cancels, in the diagram of figure 6, both the response 63 and the modify command 57.

Since the master smartcard 2 keeps record of any created object/file and on which slave smartcard 3 it was created, during create memory operations, the master smartcard 2 is then able to indicate to which slave smartcard a write memory command or a read memory command must be redirected.

The previously described mechanism, allowing any command 5 intended to a slave smartcard 3 or any response 6 returned by a slave smartcard 3, to transit through the master smartcard 2, is also advantageous in that it allows an interesting cyphering. Such a cyphering advantageously benefits from cryptographic means 71 shared between the master smartcard 2 and a slave smartcard 3. Such cyphering/deciphering is typically integrated in the modify command 57 and in the corresponding command 58 and also in the response 68 and in the corresponding demodify command 59. It works according to the following.

When the master smartcard 2 receives a command "cmd" from the host terminal 4 through the modify command 57 and produces a modified command "cmdmod", the master smartcard 2 cyphers said modified command "cmdmod", using a cryptographic means 71 shared with the slave smartcard 3 so that only said slave smartcard 3 is able to decipher and understand it. When receiving said cyphered modified command "cmdmod" through the command 58, the slave smartcard 3 deciphers it using the cryptographic means 71 shared with the master smartcard 2. By so doing, the content of any command indirectly exchanged between the master smartcard 2 and the slave smartcard 3 remains cyphered and cannot be analyzed or interpreted by any intercepting device, even the host terminal 4 through which it necessarily transits. The transit of commands through the host terminal 4 is thus secured. When the master smartcard 2 produces the modified command "cmdmod" it may also incorporate an integrity marker. Such an integrity marker can be checked, e.g. when deciphering, to detect any change or alteration that could have been caused by any would be intercepting device.

Reciprocally, when the slave smartcard 3 sends modified response "resmod" to the host terminal 4 through the response 68, the slave smartcard 3 cyphers said modified response "resmod", using the cryptographic means 71 shared with the master smartcard 2 so that only the master smartcard 2 is able to decipher and understand it. When receiving said cyphered modified response "resmod" through the demodify 59, the master smartcard 2 deciphers it using the cryptographic means 71 shared with the slave smartcard 2. By so doing, the content of any response indirectly exchanged between the slave smartcard 3 and the master smartcard 2 remains cyphered and cannot be analyzed or interpreted by any intercepting device, even the host terminal 4 through which it necessarily transits. The transit of responses through the host terminal 4 is thus secured. When the slave smartcard 3 produces the modified response "resmod" it may also incorporate an integrity marker. Such an integrity marker can be checked, e.g. when deciphering, to detect any change or alteration that could have been caused by any would be intercepting device.

The perimeter of the exchanges secured by means of said cryptographic means 71, shared between the master smartcard 2 and a slave smartcard 3, is figured by a dashed rectangle 71 in figures 5, 6.

Such a cryptographic means 71 must be shared between the master smartcard 2 and any slave smartcard 3 attached to said master smartcard. There can be a single cryptographic means associated to the master smartcard 2 and shared with all the slave smartcards 3, or preferentially there can be a different cryptographic means for each slave smartcard 2.

A cryptographic means 71 is, advantageously securely, placed into a slave smartcard 3, e.g. during a necessary initialization step, arranging a standard smartcard to make it a slave smartcard, or preferentially during an association step arranging a slave smartcard 3 to make it a slave of a given master smartcard 2. Said initialization step and association step can advantageously be grouped. Said cryptographic means 71 is also placed into the master smartcard 2, either during said slave smartcard initialization step or during a specific master smartcard initialization, e.g. during its manufacturing or personalization.

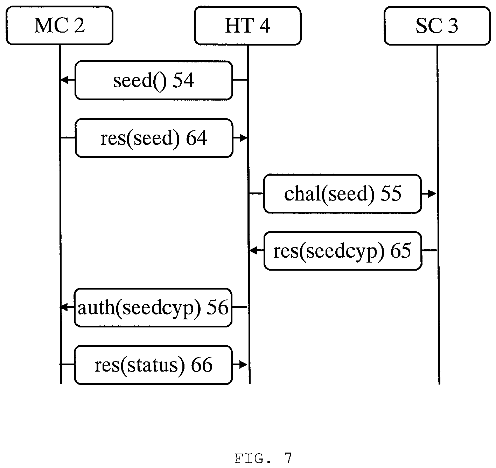

In order to secure the exchanges between the master smartcard 2 and one of its slave smartcard 3, the master smartcard 2 may previously authenticate a pretending slave smartcard 3. Since the master smartcard 2 and a slave smartcard 3 cannot communicate directly, said authentication is realized through the host terminal 4 and is thus called remote authentication. Said remote authentication can be applied thanks to three new added commands/programs: a seed command 54 and an authenticate 56 command, whose respective corresponding programs are loaded into the master smartcard 2 and a challenge command 55, whose corresponding program is loaded into the slave smartcard 3. Said three commands/programs function and are used the following way, described with reference to figure 7.

The host terminal 4 first uses the seed command 54 to ask the master smartcard 2 to provide a seed "seed". Such a seed is, generally, a random number, commonly used in cryptographic challenges. Upon request, the master smartcard 2 produces such a seed "seed" and sends it back to the host terminal 4 through a response 64 comprising said seed.

The host terminal 4 then transmits said seed "seed" to the slave smartcard 3, through a challenge command 55 comprising said seed. Said challenge command 55 also asks the slave smartcard 3 to cypher said seed "seed" using a cryptographic means shared between the master smartcard 2 and the slave smartcard 3, e.g. the previously mentioned cryptographic means 71. The slave smartcard 3 cyphers the seed "seed" to produces a cyphered seed "seedcyp", and returns said cyphered seed to the host terminal 4 through a response 65 comprising said cyphered seed "seedcyp".

The host terminal 4 then transmits said cyphered seed "seedcyp" to the master smartcard 2, through an authenticate command 56 comprising said cyphered seed. The master smartcard 2 is able to check, applying the cryptographic means 71 to the cyphered seed "seedcyp" and comparing to the original seed "seed", if the cyphered seed "seedcyp" has been effectively cyphered using said cryptographic means 71 or not. If the result of the check is positive, it ascertains that the slave smartcard 3 is in possession of said cryptographic means 71, and thus is really an authorized slave smartcard 3 associated to the master smartcard 2.

Advantageously, said remote authentication of a slave smartcard 3, is applied before any redirection to said slave smartcard 3 is considered.

Using such a remote authentication confirms, with rather high confidence, the authenticity of the slave smartcard 3. Such a remote authentication is typically applied at least once per session, while one can be sure that the slave smartcard 3 remains the same, that is, as long as the slave smartcard 2 remains in communication with the communication interface 43 linked to the host terminal 4.

This allows the master smartcard 2 to remotely authenticate a slave smartcard 3 before exchanging with it. Accordingly, a slave smartcard may reciprocally authenticate the master smartcard 2, using a similar process. In order to secure the exchanges between a slave smartcard 3 and its master smartcard 2, the slave smartcard 3 may previously authenticate a pretending master smartcard 2. Since the master smartcard 2 and a slave smartcard 3 cannot communicate directly, said authentication is realized through the host terminal 4 and is thus called remote authentication. Said remote authentication can be applied thanks to three new added commands/programs: a seed command and an authenticate command, whose respective corresponding programs are loaded into the slave smartcard 3 and a challenge command, whose corresponding program is loaded into the master smartcard 2. Said three commands/programs function and are used in a symmetrical way, as previously described with reference to figure 7.

This allows a slave smartcard 3 to remotely authenticate its master smartcard 2 before exchanging with it.

Figures 1 shows a diagram with a dedicated communication interface/card reader 42 for the master smartcard 2 and a dedicated communication interface/card reader 43 for the slave smartcard 3. This is a preferred configuration. However, if only one communication interface/card reader 42, 43 is available, it is possible to proceed by switching the master smartcard 2 and the slave smartcard 3, between operations. However this complicates the process, especially with respect to authentication.

Figures 5, 6 show the perimeter of protection granted by the use of the cryptographic means 71 shared between the master smartcard 2 and a slave smartcard 3. It appears that some of the exchanges are not covered. To secure said exchanges, between the host terminal 4 and the master smartcard 2, according to another characteristic, any command 5 transmitted from the host terminal 4 to the master smartcard 2 is cyphered by the host terminal 4 and deciphered by the master smartcard 2, using a cryptographic means 72 shared between the host terminal 4 and the master smartcard 2. Such a cryptographic means 72 is most often already present in a host terminal 4/smartcard environment and may be sometimes referred to by "session" cryptographic means. Reciprocally, any response 6 transmitted from the master smartcard 2 to the host terminal 4 is cyphered by the master smartcard 2 and deciphered by the host terminal 4, also using said cryptographic means 72 shared between the host terminal 4 and the master smartcard 2.

Figures 5, 6 show the perimeter of protection granted by the use of the cryptographic means 72 shared between the master smartcard 2 and the host terminal 4. It appears that, in combination with the protection granted by the use of the cryptographic means 71, all exchanges are covered by at least one cryptographic means 71, 72.

Similarly, to secure exchanges between the host terminal 4 and the slave smartcard 3, any command 5 transmitted from the host terminal 4 to the slave smartcard 3 can be cyphered by the host terminal 4 and deciphered by the slave smartcard 3, using a cryptographic means 73 shared between the host terminal 4 and the slave smartcard 3, and any response 6 transmitted from the slave smartcard 3 to the host terminal 4 can be cyphered by the slave smartcard 3 and deciphered by the host terminal 4, also using said cryptographic means 73 shared between the host terminal 4 and the slave smartcard 3.

However said characteristic, is not so important, as can be seen, in figures 5, 6 by the perimeter covered by said cryptographic means 73.

In the system 1, both commands 5 and responses 6 are drafted using a given application protocol, specifying their syntax. According to another advantageous characteristic, said syntax is respected, even when a command, respectively a response, is redirected, or cyphered. This is done through two new added programs, one loaded into the master smartcard 2 and on loaded into the slave smartcard 3. Said programs can be called protocol program and are in charge of encapsulate a command, respectively a response, into a command, respectively a response, according to said application protocol. The protocol program of the master smartcard 2 is e.g. activated during the modify command 57, and applied to a command before it is transmitted to the slave smartcard 3. The protocol program of the slave smartcard 3 is e.g. activated during the response 68, and applied to a response before it is transmitted to the master smartcard 3.

Said application protocol, is preferably the application protocol data unit, APDU, protocol, often used in the domain of smartcards.

Any command and/or response exchanged between the host terminal 4 and either the master smartcard 2 or a slave smartcard 3, are exchanged using a transmission protocol. Said transmission protocol, especially when the exchanges are cyphered, is preferably the secure messaging, SM, protocol.

The principles of the invention, as previously described, are not dedicated to a particular operating system. Said principles can be applied either to a smartcard running a Java Card environment or to a smartcard running a Native C environment.

The invention also concerns a master smartcard 2 arranged to operate in such a system 1. With respect to a standard smartcard, a master smartcard 2 comprises some added programs, as e.g. the modify program or the seed program. Such a master smartcard 2 also comprises added functionalities such as means for keeping record and redirecting.

The invention also concerns a slave smartcard 3 arranged to operate in such a system 1. With respect to a standard smartcard, a slave smartcard 3 comprises some removed and some added programs. E.g. all the prior art memory managing programs: create memory, write memory, read memory are removed so that a slave smartcard memory means 33 cannot be managed directly by a host terminal 4. Said programs are replaced by the corresponding programs, runnable only indirectly through a redirection transiting through the master smartcard 2. Some new programs are also added, such as the challenge program. A slave smartcard 3 must also be initialized to become a slave smartcard 3 and associated to a given master smartcard 2, e.g. including sharing of cryptographic means 71, to become a slave smartcard 3 of said particular master smartcard 2.

The invention also concerns a host terminal 4 arranged to operate in such a system 1. With respect to a standard host terminal, such a host terminal 4 is able to handle the new added processes, such as redirecting or remotely authenticating.

While there is shown and described the present preferred embodiment of the invention, it is to be distinctly understood that this invention is not limited thereto but may be variously embodied to practice within the scope of the following claims.

## Claims

1. A system (1), comprising a master smartcard (2) comprising a microcircuit (21) comprising computing means (22) and memory means (23) and a communication interface (24) able to communicate with a host terminal (4), and a host terminal (4) comprising computing means (41), a man machine interface (46), and at least one corresponding communication interface (42) able to communicate with said master smartcard (2), said system (1) further comprises at least one slave smartcard (3) comprising a microcircuit (31) comprising computing means (32) and memory means (33) and a communication interface (34) able to communicate with a host terminal (4), and in that the host terminal (4) comprises at least one corresponding communication interface (43) able to communicate with said slave smartcard (3),
wherein any command (5), initiated from the host terminal (4), finally intended to a slave smartcard (3), is sent by the host terminal (4) to the master smartcard (2), the master smartcard (2) responding to the host terminal (4) using a response including a modified command, the host terminal (4) then sending the modified command to the slave smartcard (3), and
wherein the result of the command is modified by the slave smartcard (3), to provide a modified response that is sent to the host terminal (4), the host terminal (4) sending the modified response to the master smartcard (2) which demodifies the modified response and sends the demodified response to the host terminal (4) **characterized in that** said slave smartcard (3) is arranged so that its memory means (33) are used as extension for the memory means (23) of the master smartcard (2).

2. The system (1) of any one of claim **1,** wherein said master smartcard (2) is arranged to selectively redirect a create memory command (51) to said at least one slave smartcard (3).

3. The system (1) of any one of claims **1** or **2,** wherein said master smartcard (2) is arranged to keep record of any redirected create memory command (51) and to redirect accordingly any following corresponding write memory command (52) or read memory command (53).

4. The system (1) of any one of claims **1** to **3,** wherein any redirected command (67,58) is initially cyphered by the master smartcard (2) and finally deciphered by the slave smartcard (3), using a cryptographic means (71) shared between the master smartcard (2) and the slave smartcard (3).

5. The system (1) of any one of claims **1** to **4,** wherein any response (68,59) to a redirected command (67,58) is initially cyphered by the slave smartcard (3) and finally deciphered by the master smartcard (2), using a cryptographic means (71) shared between the master smartcard (2) and the slave smartcard (3).

6. The system (1) of any one of claims **1** to **5,** further comprising commands to remotely authenticate a slave smartcard (3) comprising:
- a seed command (54), to obtain a seed from the master smartcard (2),
- a challenge command (55), to transmit said seed to the slave smartcard (3) and to have said seed cyphered by the slave smartcard (3), using a cryptographic means (71) shared between the master smartcard (2) and the slave smartcard (3), and
- an authenticate command (56), to transmit said cyphered seed to the master smartcard (2) and have said cyphered seed checked by the master smartcard (2).

7. The system (1) of claim **6,** wherein a slave smartcard (3) must be authenticated before any redirection to said slave smartcard (3) takes place.

8. The system (1) of any one of claims **1** to **7,** further comprising commands to remotely authenticate a master smartcard (2) comprising:
- a seed command, to obtain a seed from the slave smartcard (3),
- a challenge command, to transmit said seed to the master smartcard (2) and to have said seed cyphered by the master smartcard (2), using a cryptographic means (71) shared between the slave smartcard (3) and the master smartcard (2), and
- an authenticate command, to transmit said cyphered seed to the slave smartcard (3) and have said cyphered seed checked by the slave smartcard (3).

9. The system (1) of any one of claims **1** to **8,** wherein any command (5) transmitted from the host terminal (4) to the master smartcard (2) is cyphered by the host terminal (4) and deciphered by the master smartcard (2), and any response (6) transmitted from the master smartcard (2) to the host terminal (4) is cyphered by the master smartcard (2) and deciphered by the host terminal (4), both using a cryptographic means (72) shared between the host terminal (4) and the master smartcard (2).

10. The system (1) of any one of claims **1** to **9,** wherein any command (5) transmitted from the host terminal (4) to a slave smartcard (3) is cyphered by the host terminal (4) and deciphered by the slave smartcard (3), and any response (6) transmitted from a slave smartcard (3) to the host terminal (4) is cyphered by the slave smartcard (3) and deciphered by the host terminal (4), both using a cryptographic means (73) shared between the host terminal (4) and said slave smartcard (3) .

11. The system (1) of any one of claims **1** to **10,** wherein commands (5) and responses (6) are drafted using a given application protocol, preferably the application protocol data unit, APDU, protocol, wherein the master smartcard (2) comprises a dedicated protocol command (57) to encapsulate a command (5) to be redirected, according to said application protocol, and wherein the slave smartcard (3) comprises a dedicated protocol command (68) to encapsulate a response (6) to a redirected command (5), according to said application protocol.

12. The system (1) of any one of claims **1** to **11,** wherein commands (5) and responses (6) are exchanged using a given transmission protocol, preferably the secure messaging, SM, protocol.

13. A master smartcard (2) able to operate in a system (1) according to any one of claims **1** to **12.**

## Patentansprüche

1. System (1), umfassend: eine Master-Smartcard (2), die einen Mikroschaltkreis (21), der ein Rechenmittel (22) und ein Speichermittel (23) umfasst, sowie eine Kommunikationsschnittstelle (24) umfasst, die mit einem Host-Endgerät (4) kommunizieren kann, und ein Host-Endgerät (4), das ein Rechenmittel (41), eine Mensch-Maschine-Schnittstelle (46) und mindestens eine entsprechende Kommunikationsschnittstelle (42) umfasst, die mit der Master-Smartcard (2) kommunizieren kann, wobei das System (1) ferner mindestens eine Slave-Smartcard (3) umfasst, die einen Mikroschaltkreis (31), der ein Rechenmittel (32) und ein Speichermittel (33) umfasst, und eine Kommunikationsschnittstelle (34) umfasst, die mit einem Host-Endgerät (4) kommunizieren kann, und wobei das Host-Endgerät (4) mindestens eine entsprechende Kommunikationsschnittstelle (43) umfasst, die mit der Slave-Smartcard (3) kommunizieren kann,
wobei jeder Befehl (5), der von dem Host-Endgerät (4) initiiert wird, der letztendlich an eine Slave-Smartcard (3) gerichtet ist, durch das Host-Endgerät (4) an die Master-Smartcard (2) gesendet wird, wobei die Master-Smartcard (2) dem Host-Endgerät (4) mit einer Antwort antwortet, die einen modifizierten Befehl enthält, wobei das Host-Endgerät (4) dann den modifizierten Befehl an die Slave-Smartcard (3) sendet, und
wobei das Ergebnis des Befehls durch die Slave-Smartcard (3) modifiziert wird, um eine modifizierte Antwort bereitzustellen, die an das Host-Endgerät (4) gesendet wird, wobei das Host-Endgerät (4) die modifizierte Antwort an die Master-Smartcard (2) sendet, die die modifizierte Antwort demodifiziert und die demodifizierte Antwort an das Host-Endgerät (4) sendet, **dadurch gekennzeichnet, dass** die Slave-Smartcard (3) so konfiguriert ist, dass ihr Speichermittel (33) als Erweiterung für das Speichermittel (23) der Master-Smartcard (2) verwendet wird.

2. System (1) nach Anspruch 1, wobei die Master-Smartcard (2) dafür ausgelegt ist, einen Speichererzeugungsbefehl (51) selektiv an die mindestens eine Slave-Smartcard (3) umzuleiten.

3. System (1) nach einem der Ansprüche 1 und 2, wobei die Master-Smartcard (2) dafür ausgelegt ist, Aufzeichnungen über jeden umgeleiteten Speichererzeugungsbefehl (51) zu führen und jeden folgenden entsprechenden Speicherschreibbefehl (52) oder Speicherlesebefehl (53) entsprechend umzuleiten.

4. System (1) nach einem der Ansprüche 1 bis 3, wobei jeder umgeleitete Befehl (67, 58) unter Verwendung eines zwischen der Master-Smartcard (2) und der Slave-Smartcard (3) gemeinsam genutzten kryptographischen Mittels (71) zunächst durch die Master-Smartcard (2) chiffriert und schließlich durch die Slave-Smartcard (3) dechiffriert wird.

5. System (1) nach einem der Ansprüche 1 bis 4, wobei jede Antwort (68, 59) auf einen umgeleiteten Befehl (67, 58) unter Verwendung eines zwischen der Master-Smartcard (2) und der Slave-Smartcard (3) gemeinsam genutzten kryptographischen Mittels (71) zunächst durch die Slave-Smartcard (3) chiffriert und schließlich durch die Master-Smartcard (2) dechiffriert wird.

6. System (1) nach einem der Ansprüche 1 bis 5, das ferner Befehle zur Fernauthentifizierung einer Slave-Smartcard (3) umfasst, wobei das System umfasst:
- einen Keimbefehl (54), um einen Keim von der Master-Smartcard (2) zu erhalten,
- einen Hinterfragungsbefehl (55), um den Keim an die Slave-Smartcard (3) zu übertragen und den Keim durch die Slave-Smartcard (3) unter Verwendung eines zwischen der Master-Smartcard (2) und der Slave-Smartcard (3) gemeinsam genutzten kryptographischen Mittels (71) chiffrieren zu lassen, und
- einen Authentifizierungsbefehl (56), um den chiffrierten Keim an die Master-Smartcard (2) zu übertragen und den chiffrierten Keim durch die Master-Smartcard (2) überprüfen zu lassen.

7. System (1) nach Anspruch 6, wobei eine Slave-Smartcard (3) authentifiziert werden muss, bevor eine Umleitung zu der Slave-Smartcard (3) stattfindet.

8. System (1) nach einem der Ansprüche 1 bis 7, das ferner Befehle zur Fernauthentifizierung einer Master-Smartcard (2) umfasst, wobei das System umfasst:
- einen Keim-Befehl, um einen Keim von der Slave-Smartcard (3) zu erhalten,
- einen Hinterfragungsbefehl, um den Keim an die Master-Smartcard (2) zu übertragen und den Keim durch die Master-Smartcard (2) unter Verwendung eines zwischen der Slave-Smartcard (3) und der Master-Smartcard (2) gemeinsam genutzten kryptographischen Mittels (71) chiffrieren zu lassen, und
- einen Authentifizierungsbefehl, um den chiffrierten Keim an die Slave-Smartcard (3) zu übertragen und den chiffrierten Keim durch die Slave-Smartcard (3) überprüfen zu lassen.

9. System (1) nach einem der Ansprüche 1 bis 8, wobei jeder Befehl (5), der von dem Host-Endgerät (4) an die Master-Smartcard (2) übertragen wird, durch das Host-Endgerät (4) chiffriert wird und durch die Master-Smartcard (2) dechiffriert wird, und jede Antwort (6), die von der Master-Smartcard (2) an das Host-Endgerät (4) übertragen wird, durch die Master-Smartcard (2) chiffriert und durch das Host-Endgerät (4) dechiffriert wird, wobei beide ein kryptographisches Mittel (72) verwenden, das zwischen dem Host-Endgerät (4) und der Master-Smartcard (2) gemeinsam genutzt wird.

10. System (1) nach einem der Ansprüche 1 bis 9, wobei jeder Befehl (5), der von dem Host-Endgerät (4) an die Slave-Smartcard (3) übertragen wird, durch das Host-Endgerät (4) chiffriert wird und durch die Slave-Smartcard (3) dechiffriert wird, und jede Antwort (6), die von einer Slave-Smartcard (3) an das Host-Endgerät (4) übertragen wird, durch die Slave-Smartcard (3) chiffriert und durch das Host-Endgerät (4) dechiffriert wird, wobei beide ein kryptographisches Mittel (73) verwenden, das zwischen dem Host-Endgerät (4) und der Slave-Smartcard (3) gemeinsam genutzt wird.

11. System (1) nach einem der Ansprüche 1 bis 10, wobei Befehle (5) und Antworten (6) unter Verwendung eines gegebenen Anwendungsprotokolls, vorzugsweise der Application Protocol Data Unit (APDU), aufgesetzt werden, wobei die Master-Smartcard (2) einen dedizierten Protokollbefehl (57) umfasst, um einen umzuleitenden Befehl (5) gemäß dem Anwendungsprotokoll zu verkapseln, und wobei die Slave-Smartcard (3) einen dedizierten Protokollbefehl (68) umfasst, um eine Antwort (6) auf einen umgeleiteten Befehl (5) gemäß dem Anwendungsprotokoll zu verkapseln.

12. System (1) nach einem der Ansprüche 1 bis 11, wobei Befehle (5) und Antworten (6) unter Verwendung eines gegebenen Übertragungsprotokolls, vorzugsweise des Secure Messaging (SM)-Protokolls, ausgetauscht werden.

13. Master-Smartcard (2), die in einem System (1) nach einem der Ansprüche 1 bis 12 arbeiten kann.

## Revendications

1. Système (1), comprenant une carte à puce maître (2) comprenant un microcircuit (21) comprenant des moyens de calcul (22) et des moyens de mémoire (23) et une interface de communication (24) apte à communiquer avec un terminal hôte (4), et un terminal hôte (4) comprenant des moyens de calcul (41), une interface homme-machine (46) et au moins une interface de communication correspondante (42) apte à communiquer avec ladite carte à puce maître (2), ledit système (1) comprend en outre au moins une carte à puce esclave (3) comprenant un microcircuit (31) comprenant des moyens de calcul (32) et des moyens de mémoire (33) et une interface de communication (34) apte à communiquer avec un terminal hôte (4), et en ce que le terminal hôte (4) comprend au moins une interface de communication correspondante (43) apte à communiquer avec ladite carte à puce esclave (3),
dans lequel toute instruction (5), initiée à partir du terminal hôte (4), finalement destinée à une carte à puce esclave (3), est envoyée par le terminal hôte (4) à la carte à puce maître (2), la carte à puce maître (2) répondant au terminal hôte (4) à l'aide d'une réponse incluant une instruction modifiée, le terminal hôte (4) envoyant ensuite l'instruction modifiée à la carte à puce esclave (3), et
dans lequel le résultat de l'instruction est modifié par la carte à puce esclave (3), pour fournir une réponse modifiée qui est envoyée au terminal hôte (4), le terminal hôte (4) envoyant la réponse modifiée à la carte à puce maître (2) démodifie la réponse modifiée et envoie la réponse démodifiée au terminal hôte (4)
**caractérisé en ce que** ladite carte à puce esclave (3) est conçue de sorte que ses moyens de mémoire (33) sont utilisés comme extension pour les moyens de mémoire (23) de la carte à puce maître (2).

2. Système (1) selon l'une quelconque de la revendication 1, dans lequel ladite carte à puce maître (2) est conçue pour rediriger sélectivement une instruction de création de mémoire (51) vers ladite au moins une carte à puce esclave (3).

3. Système (1) selon l'une quelconque des revendications 1 ou 2, dans lequel ladite carte à puce maître (2) est conçue pour tenir un registre de toute instruction de création de mémoire (51) redirigée et pour rediriger en conséquence toute instruction d'écriture dans la mémoire (52) ou instruction de lecture de mémoire (53) correspondante suivante.

4. Système (1) selon l'une quelconque des revendications 1 à 3, dans lequel toute instruction redirigée (67, 58) est initialement chiffrée par la carte à puce maître (2) et finalement déchiffrée par la carte à puce esclave (3), à l'aide d'un moyen cryptographique (71) partagé entre la carte à puce maître (2) et la carte à puce esclave (3).

5. Système (1) selon l'une quelconque des revendications 1 à 4, dans lequel toute réponse (68, 59) à une instruction redirigée (67, 58) est initialement chiffrée par la carte à puce esclave (3) et finalement déchiffrée par la carte à puce maître (2), à l'aide d'un moyen cryptographique (71) partagé entre la carte à puce maître (2) et la carte à puce esclave (3).

6. Système (1) selon l'une quelconque des revendications 1 à 5, comprenant en outre des instructions pour authentifier à distance une carte à puce esclave (3) comprenant :
- une instruction de racine (54) pour obtenir une racine à partir de la carte à puce maître (2),
- une instruction de tâche (55), pour transmettre ladite racine à la carte à puce esclave (3) et pour amener ladite racine à être chiffrée par la carte à puce esclave (3), à l'aide d'un moyen cryptographique (71) partagé entre la carte à puce maître (2) et le carte à puce esclave (3), et
- une instruction d'authentification (56), pour transmettre ladite racine chiffrée à la carte à puce maître (2) et amener ladite racine chiffrée à être vérifiée par la carte à puce maître (2).

7. Système (1) selon la revendication 6, dans lequel une carte à puce esclave (3) doit être authentifiée avant que toute redirection vers ladite carte à puce esclave (3) ait lieu.

8. Système (1) selon l'une quelconque des revendications 1 à 7, comprenant en outre des instructions pour authentifier à distance une carte à puce maître (2) comprenant :
- une instruction de racine, pour obtenir une racine à partir de la carte à puce esclave (3),
- une instruction de tâche, pour transmettre ladite racine à la carte à puce maître (2) et pour amener ladite racine à être chiffrée par la carte à puce maître (2), à l'aide d'un moyen cryptographique (71) partagé entre la carte à puce esclave (3) et le carte à puce maître (2), et
- une instruction d'authentification, pour transmettre ladite racine chiffrée à la carte à puce esclave (3) et amener ladite racine chiffrée à être vérifiée par la carte à puce esclave (3).

9. Système (1) selon l'une quelconque des revendications 1 à 8, dans lequel toute instruction (5) transmise du terminal hôte (4) à la carte à puce maître (2) est chiffrée par le terminal hôte (4) et déchiffrée par la carte à puce maître (2), et toute réponse (6) transmise de la carte à puce maître (2) au terminal hôte (4) est chiffrée par la carte à puce maître (2) et déchiffrée par le terminal hôte (4), les deux à l'aide d'un moyen cryptographique (72) partagé entre le terminal hôte (4) et la carte à puce maître (2).

10. Système (1) selon l'une quelconque des revendications 1 à 9, dans lequel toute instruction (5) transmise du terminal hôte (4) à une carte à puce esclave (3) est chiffrée par le terminal hôte (4) et déchiffrée par la carte à puce esclave (3), et toute réponse (6) transmise d'une carte à puce esclave (3) au terminal hôte (4) est chiffrée par la carte à puce esclave (3) et déchiffrée par le terminal hôte (4), les deux à l'aide d'un moyen cryptographique (73) partagé entre le terminal hôte (4) et la carte à puce esclave (3).

11. Système (1) selon l'une quelconque des revendications 1 à 10, dans lequel les instructions (5) et les réponses (6) sont élaborées à l'aide un protocole d'application donné, de préférence le protocole d'unité de données de protocole d'application, APDU, dans lequel la carte à puce maître (2) comprend une instruction de protocole dédiée (57) pour encapsuler une instruction (5) à rediriger, conformément audit protocole d'application, et dans lequel la carte à puce esclave (3) comprend une instruction de protocole dédiée (68) pour encapsuler une réponse (6) dans une instruction redirigée (5), conformément audit protocole d'application.

12. Système (1) selon l'une quelconque des revendications 1 à 11, dans lequel les instructions (5) et les réponses (6) sont échangées à l'aide d'un protocole de transmission donné, de préférence le protocole de messagerie sécurisée, SM.

13. Carte à puce maître (2) apte à fonctionner dans un système (1) selon l'une quelconque des revendications 1 à 12.
